# EUROPEAN PATENT APPLICATION

(11) **EP 4 737 033 A1**
(43) Date of publication of application: **06.05.2026**
(21) Application number: 24209783.0
(22) Date of filing: 30.10.2024
(51) Int. Cl.: B22F 10/28, B22F 12/00, B22F 12/37, B22F 12/55, B22F 12/57, B29C 64/153, B33Y 10/00, B33Y 30/00, B33Y 40/00

(54) **AN APPARATUS FOR POWDER-BASED ADDITIVE MANUFACTURING OF THREE-DIMENSIONAL STRUCTURES**

(71) Applicant: ETH Zurich, 8092 Zurich (CH)
(72) Inventor: BAMBACH, Markus, 8006 Zürich (CH); TUCKER, Michael, 8610 Uster (CH); STEFFEN, Raphael, 8046 Zürich (CH); PIRCHL, Dion, 8038 Zürich (CH)

(57) **Abstract**

The invention refers to an apparatus for powder-based additive manufacturing of three-dimensional structures on a platform (4). The apparatus comprises a powder delivery mechanism (100) with a first powder chamber (11) for a first powder with a first powder outlet, and a second powder chamber (12) for a second powder with a second powder outlet. In addition, the powder delivery mechanism (100) comprises a gating mechanism (3) with a first slot (31) and a second slot (32), wherein the powder delivery mechanism (100) and/or the platform (4) are rotatable around a platform center axis (10) of the platform (4), wherein the gating mechanism (3) is arranged such that the first slot (31) defines an outlet surface of the first powder outlet and the second slot (32) defines an outlet surface of the second powder outlet, wherein the gating mechanism (3) is displaceable relatively to the first powder outlet and/or the second powder outlet.

## Description

### Technical Field

The invention refers in a first aspect to an apparatus for powder-based additive manufacturing of three-dimensional structures, in a second aspect to a powder delivery mechanism for the apparatus, in a third aspect to a gating mechanism for the powder delivery mechanism and in a fourth aspect to a method to manufacture three-dimensional structures with the apparatus.

### Background Art

Additive manufacturing enables the production of highly performant parts due to the high degree of design freedom they afford.

To enable and accelerate the manufacturing of round or circular shaped parts, rotational additive manufacturing machines exist, which deposit material in a circular, continuous manner, while the deposited material remains stationary. Following the deposition of the powder material, a laser selectively joins material for the additive manufacturing process.

Certain circular shaped parts like nozzles, bearings, bushings, impellers, or heat exchangers, would benefit from the use of multiple materials, whereby the material properties can be locally varied based on the specific application.

With existing processes, such multi-material composite parts would require multiple manufacturing steps. This adds significant cost and manufacturing time to these parts.

### Disclosure of the Invention

Therefore, the problem to be solved by the present invention is to provide an apparatus to manufacture roughly axisymmetric or circular shaped parts made of multiple materials.

The apparatus should comprise a powder deposition system that allows for the selective deposition of multiple materials (metals, polymers, or ceramics) wherein the rapid deposition process enables accelerated manufacturing. In addition, the material should be deposited adjacent to one another, to enable the additive manufacturing of composite /multi-materials.

This problem is solved by present in a first aspect referring to an apparatus for powder-based additive manufacturing of three-dimensional structures, in a second aspect to a powder delivery mechanism for the apparatus, in a third aspect to a gating mechanism for the powder delivery mechanism and in a fourth aspect to a method to manufacture three-dimensional structures with the apparatus.

The **first aspect** of the invention refers to the apparatus for powder-based additive manufacturing of three-dimensional structures on a platform. The apparatus comprises a powder delivery mechanism comprising a first powder chamber for a first powder, wherein the first powder chamber comprises a first outlet. The apparatus comprises further a second powder chamber for a second powder, wherein the second powder chamber comprises a second powder outlet.

In a further advantageous embodiment of the invention, the powder delivery mechanism can of course further comprise a third, fourth, fifth or any further powder chamber for a third, fourth, fifth or any further powder, wherein the respective powder chamber comprises a respective powder outlet and is further adjusted to match the powder delivery mechanism.

The first respectively the second powder outlet are adapted to release the first respectively second powder from the first respectively second powder chamber during the intended use of the apparatus, when the powder is deposited on the platform.

The first and/or second powder is advantageously a metallic powder comprising a material selected from the group consisting of Cu, Ni, Fe, Al, Nb, Mg elemental powders or alloys and mixtures thereof.

Further advantageously, the apparatus can be used to deposit powder combinations e.g., depositing a first powder through the first outlet surface and a second powder through the second outlet surface. If there is a third powder chamber, there can be further a third powder be deposited, such that a first powder, a second powder and a third powder are deposited. In particular, the third powder here might be the same type as the first powder and therefore lead to an alternating deposition of powders.

The powder delivery mechanism and/or the platform are rotatable around a platform center axis of the platform. Therefore, the powder delivery mechanism might be rotatable around the platform center axis, but also the platform might be rotatable around the platform center axis, or both are rotatable.

Advantageously, the term platform center axis refers to a center axis of the platform, which is the center of the rotational movement of the platform and/or the powder delivery mechanism.

Because of the rotational movement of the powder delivery mechanism relatively to the platform, the powder can be deposited during the circular movement of the powder delivery mechanism relatively to the platform and at the same time, the powder can be consolidated with an energy source (e.g. laser, e-beam, microwaves, IR heating) that exposes the deposited material.

Compared to a straight movement of the powder delivery mechanism, the rotational movement has the advantage of producing rotational parts by means of additive manufacturing easily and simultaneously to allow a linear process, wherein the powder delivery mechanism can deposit material continuously without interrupting the consolidation process.

In an advantageous embodiment, for the powder delivery mechanism, the first powder outlet is arranged before the second powder outlet in a rotation direction respectively in an angular direction around the platform center axis.

In addition, the powder delivery mechanism comprises a gating mechanism with a first slot and a second slot. There can be further a third and fourth or any further slot comprised in the gating mechanism.

In particular, if there are more than the first and the second powder chamber, the gating mechanism might comprise more than the first and the second slot. For example, if the powder delivery mechanism comprises the first, the second and a third powder chamber, the gating mechanism comprises the first, the second and a third slot accordingly.

Advantageously, the gating mechanism is removable from the powder delivery mechanism, but can also be an integrated part of the powder delivery mechanism that is not removable.

The gating mechanism is arranged such that the first slot defines an outlet surface of the first powder outlet and the second slot defines an outlet surface of the second powder outlet.

For an embodiment as mentioned above, where the powder delivery mechanism comprises more than the first and the second powder chamber and the gating mechanism comprises more than the first and the second slot, this arrangement is of course adapted, e.g., such that a third slot of the gating mechanism defines a third outlet surface of a third powder outlet.

In addition, the gating mechanism is displaceable or repositionable relatively to the first powder outlet and/or the second powder outlet, in particular in horizontal direction and/or parallel to the platform surface and/or perpendicular to the platform center axis.

In particular, the displacement serves to align the first and second and any further slot of the gating mechanism with the first and second and any further powder outlet, such that the overlap of the respective slot with the respective powder outlet defines the outlet surface and therefore in particular the area, where the powder from the respective powder chamber can be released, to control the powder flux through the respective outlet surface and/or to control the form of the respective powder beds.

Advantageously, the gating mechanism is displaceable in radial direction of the platform center axis.

Advantageously, it is in addition displaceable also parallel to the platform surface and/or in horizontal direction and/or perpendicular to the platform center axis.

Displaceable here means that the gating mechanism is movable, or slidable, or adjustable in regard to the first and second powder outlet, in particular in horizontal direction, in particular relatively to the platform (if the platform forms an horizontal plane of the apparatus). This further means that it is movably mounted relatively to the first and/or second powder outlet. In particular, the gating mechanism is movably mounted at the powder delivery mechanism or at the apparatus.

The gating mechanism can for example be mounted on tracks that are attached to the powder delivery mechanism or to the apparatus and then be moved on these tracks, in particular, wherein such tracks are aligned in parallel with the platform surface, such that the gating mechanism aligns with the first and/or second powder outlet.

Since the gating mechanism is displaceable in radial direction and the first and second slot define the first respective second outlet surface of the first respective second powder outlet, this gating mechanism allows for the selective deposition of multiple materials (metals, polymers, or ceramics) adjacent to one another, with adjustable powder bed coverage ranging between 0-100% for each material.

In an advantageous embodiment of the invention, the apparatus comprises further a decoupling mechanism arranged between the first and/or second powder chamber and the respective first and/or second powder outlet. The decoupling mechanism is advantageously adapted to control the powder flux from the first and/or second powder chamber to the respective first and/or second powder outlet.

The decoupling mechanism therefore enables the controlled deposition of powder from the first and/or second powder chamber onto the platform.

The decoupling mechanism might in an advantageous embodiment comprise a first duct connecting the first powder chamber with the first powder outlet and/or might comprise a second duct connecting the second powder chamber with the second powder outlet.

In an advantageous embodiment of the decoupling mechanism, the first and/or second duct are tilted compared to a vertical axis of the platform. Therefore, advantageously, a smallest angle α between a first center axis of the first duct and the platform center axis is approximately 20° ≤ α ≤ 70°. Further advantageously, a smallest angle β between a second center axis of the second duct and the platform center axis of the platform is approximately 20° ≤ β ≤ 70°.

In a further advantageous embodiment of the decoupling mechanism, a valve and/or slotted wheel is arranged in the first and/or second duct to control the powder flux through the respective first and/or second duct.

In a further advantageous embodiment of the invention, the first slot and the second slot are aligned at one edge with a shortest distance d of approximately 0mm ≤ d ≤ 5mm, in particular 0.5mm ≤ d ≤ 5mm. The close alignment of the first and the second slot, that define the respective first and second outlet surface of the respective first and the second powder outlet allows the precise deposition of the powder material with a first powder bed formed from the first powder and a second powder bed formed from the second powder directly adjacent to each other on the platform. This way, the first and the second powder bed do not mix when deposited but are still arranged adjacent to form a multi-material or composite if joined with a laser. Advantageously, the distance d lies on a circle around the platform center axis. This means in particular that the beginning and end point of a center line defined on a surface of the gating mechanism facing towards the platform, where the slots are arranged, have a distance d.

In a further advantageous embodiment of the invention, the first powder outlet and the second powder outlet are aligned at one edge with a shortest distance d2 of approximately 0.5mm ≤ d2 ≤ 5mm. The close alignment of the first and the second powder outlets allows the precise deposition of the powder material with a first powder bed formed from the first powder and a second powder bed formed from the second powder directly adjacent to each other on the platform. This way, the first and the second powder bed do not mix when deposited but are still arranged adjacent to form a multi-material or composite if joined with a laser. Advantageously, the distance d lies on a circle around the platform center axis. This means in particular that the beginning and end point of a center line defined on a surface of the gating mechanism facing towards the platform, where the slots are arranged, have a distance d.

In a further advantageous embodiment of the invention, the powder delivery mechanism further comprises a front blade and/or a rear blade. The front blade, if there is any, is arranged before the gating mechanism in a rotation direction around the platform center axis. The effect of the front blade is to control the deposition of the powder and to avoid the spreading of the powder during the intended use of the apparatus.

The rear blade, if there is any, is arranged behind the gating mechanism in the said rotation direction. A blade distance between the platform and the rear blade is adjustable such that the distance defines a height of a powder bed in the intended use of the apparatus. This means in particular that when the powder is deposited as a powder bed on the platform, the rear blad will move over the powder bed and remove all the powder that stacks higher than the defined height. Therefore, the powder bed results to have an even surface which is advantageous for the manufacturing process.

In a further advantageous embodiment of the gating mechanism, the first slot and the second slot are arranged such that in the intended use of the apparatus, the first powder releasing from the first slot forms a first powder bed on the platform and the second powder releasing from the second slot forms a second powder bed on the platform adjacent to the first powder bed in radial direction of the platform. Advantageously, the first and the second slot are arranged next to each other in the rotation direction around the platform center axis. Further advantageously, the first and the second slot are two elongated slots that are arranged essentially parallel to each other with respect to their elongation.

In a further advantageous embodiment of the invention, the platform is movable relatively to the powder delivery mechanism, in particular in vertical direction.

In a further advantageous embodiment of the apparatus, the platform is movable in vertical direction away from the powder delivery mechanism. Due to the vertical movement of the platform, e.g. the platform is descending during the intended use of the apparatus while manufacturing three-dimensional structures on the platform, the powder delivery mechanism can stay at the same height. Thus, if the platform is descending and the powder delivery mechanism stays at the same place in vertical direction, the three-dimensional structures are built up layer by layer on the platform. The same is of course valid, if the powder delivery mechanism is moving in vertical direction and the platform stays at the same height. Of course, it might further be possible that the platform as well as the powder delivery mechanism moves in vertical direction.

While the platform is descending, advantageously, the platform and/or the powder delivery mechanism might rotate around the platform center axis to deposit a powder bed with the first and/or second powder on the platform.

In a further advantageous embodiment, the powder delivery mechanism comprises a material selector. In the intended use of the apparatus, the material selector separates the first and the second powder that release through the first slot and/or through the second slot to the platform.

Advantageously, the powder delivery mechanism comprises a motor that controls the material selector. The motor can slide and/or bend the material selector, depending on the required position of the material selector.

In a further advantageous embodiment of the gating mechanism, the gating mechanism comprises a mask to partially cover the first and/or the second slot. Therefore, the mask allows to produce a specific pattern of the deposited first and/or second powder bed.

A **second aspect** of the invention refers to a powder delivery mechanism for an apparatus according to the first aspect of the invention.

A **third aspect** of the invention refers to a gating mechanism for the powdery delivery mechanism according to the second aspect of the inventions or for the powder delivery mechanism for the apparatus according to the first aspect of the invention.

A **fourth aspect** refers to a method to manufacture three-dimensional structures on a platform with the apparatus according to the first aspect of the invention. The method comprises:
- Rotating the powder delivery mechanism and/or the platform around the platform center axis,
- Releasing the first powder and/or the second powder through the first slot and the second slot respectively to form a first powder bed of first powder and/or a second powder bed of second powder,
- Exposing the first and/or second powder bed to an energy source to fuse a specific area of the first and/or second powder bed.

Advantageously, the method comprises further the step of moving the platform relatively to the powder delivery mechanism in vertical direction in a linear motion or in incremental steps.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 shows an apparatus according to an advantageous embodiment of the first aspect of the invention,
Fig. 2a shows a gating mechanism according to an advantageous embodiment of the invention,
Fig. 2b shows a detailed aspect of Fig. 2a,
Fig. 2c shows a further embodiment of the gating mechanism, and
Fig. 3a to 3d show various embodiments of the decoupling mechanism.

### Modes for Carrying Out the Invention

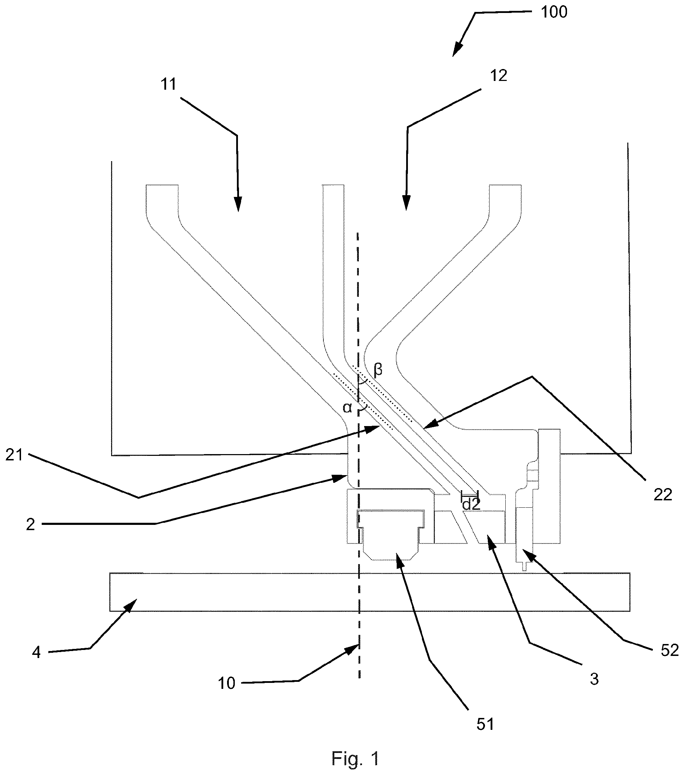

Fig. 1 shows an advantageous embodiment of the apparatus 100. The apparatus 100 for powder-based additive manufacturing of three-dimensional structures on a platform 4 comprises a powder-delivery mechanism 100 comprising a first powder chamber 11 for a first powder with a first powder outlet and a second powder chamber 12 for a second powder with a second powder outlet. In addition, the apparatus 100 comprises a gating mechanism 3 with a first slot 31 and a second slot 32. The powder delivery mechanism 100 and/or the platform 4 are rotatable around a platform center axis 10 of the platform 4. This means that either the powder delivery mechanism 100 or the platform might be rotatable around the platform center axis 10.

In an advantageous embodiment, the first powder outlet is arranged before the second powder outlet in a rotation direction around the platform center axis 10.

The gating mechanism 3 is arranged such that the first slot 31 defines an outlet surface of the first powder outlet and the second slot 32 defines an outlet surface of the second powder outlet.

The gating mechanism 3 is displaceable relatively to the first powder outlet and/or second powder outlet.

In an advantageous embodiment, as shown in the embodiment of the figure, it is displaceable in radial direction of the platform center axis 10 and/or parallel to the platform 4 and/or perpendicular to the platform center axis and/or in horizontal direction.

In an advantageous embodiment of the invention, the powder delivery mechanism 100 comprises further a decoupling mechanism 2 arranged between the first 11 and/or the second 12 powder chamber and the respective first and/or second powder outlet. The decoupling mechanism 2 is adapted to control the powder flux from the first 11 and/or the second 12 powder chamber to the respective first and/or second powder outlet.

In a further advantageous embodiment of the invention the decoupling mechanism 2 comprises a first duct 21 connecting the first powder chamber 11 with the first powder outlet and/or a second duct 22 connecting the second powder chamber 12 with the second powder outlet.

In a further advantageous apparatus, a smallest angle α between a center axis of the first duct 21 and the center axis 10 of the platform 4 is 20° ≤ α ≤ 70° and/or a smallest angle β between a center axis of the second duct 22 and the platform center axis 10 is between 20° and 70.

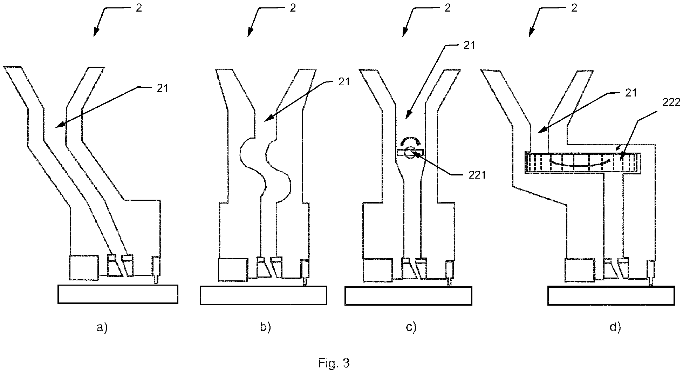

Further embodiments how the decoupling mechanism might look like are shown in Fig. 3 and discussed below.

In a further advantageous embodiment of the invention, the first powder outlet and the second powder outlet of the gating mechanism 3 are aligned at one edge with a distance d of 0mm ≤ d ≤ 5mm, in particular 0.5mm ≤ d ≤ 5mm, in particular, wherein the distance d lies on a circle around the platform center axis 10.

In a further advantageous embodiment of the powder delivery mechanism 100 as shown in Fig. 1, but still the features are option for the powder delivery mechanism 100 as shown in Fig. 1, the powder delivery mechanism 100 comprises a front blade 51 and a rear blade 52. The front blade 51 is arranged before the gating mechanism 3 in rotation direction around the platform center axis 10 and/or the rear blade 52 is arranged behind the gating mechanism 3 in the rotation direction around the platform center axis 10. Advantageously, a blade distance between the platform 4 and the rear blade 52 is adjustable such that the blade distance defines a height of a powder bed in the intended use of the apparatus.

In a further advantageous embodiment of the invention, the first slot 31 and the second slot 32 are arranged such that in the intended use of the apparatus, the first powder releasing from first slot 31 forms a first powder bed on the platform 4 and the second powder releasing from the second slot 32 forms a second powder bed on the platform 4 adjacent to the first powder bed in radial direction of the platform 4.

In a further advantageous embodiment of the invention, the platform 4 as shown in Fig. 1 is movable in vertical direction away from the powder delivery mechanism 100. This ensures that the powder delivery mechanism 100 can stay at the same height while the three-dimensional structure is built on the moving platform.

In a further advantageous embodiment of the invention, the first powder outlet and the second powder outlet are aligned at one edge with a shortest distance d2 of approximately 0.5mm ≤ d2 ≤ 5mm. The close alignment of the first and the second powder outlets allows the precise deposition of the powder material with a first powder bed formed from the first powder and a second powder bed formed from the second powder directly adjacent to each other on the platform. This way, the first and the second powder bed do not mix when deposited but are still arranged adjacent to form a multi-material or composite if joined with a laser. Advantageously, the distance d lies on a circle around the platform center axis. This means in particular that the beginning and end point of a center line defined on a surface of the gating mechanism facing towards the platform, where the slots are arranged, have a distance d.

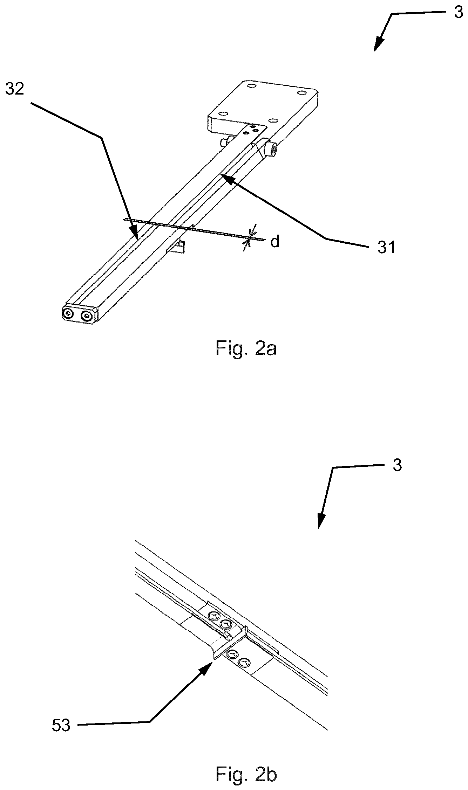

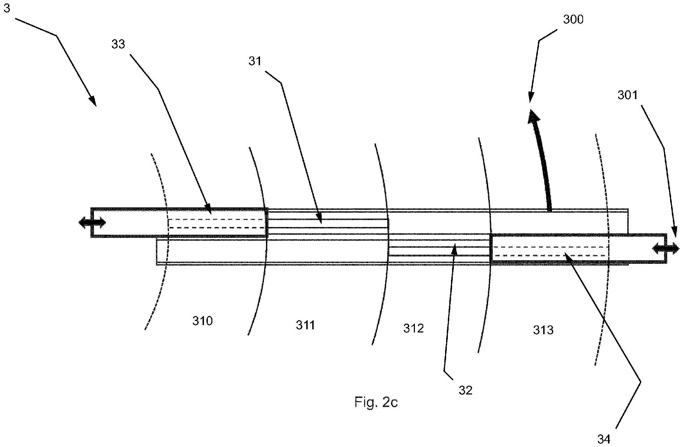

**Fig. 2a**, **b** **and** **c** show embodiments of the gating mechanism 3.

Fig. 2a shows an embodiment of a gating mechanism 3 comprising the first slot 31 and the second slot 32. The slots 31, 32 do not extend over the full length of the gating mechanism 3 and accordingly not over the full length respectively full outlet are of the first and second powder outlet, such that the outlet surface can be defined by the extension of the first 31 and/or second slot 32. As mentioned before, the gating mechanism 3 is movable in radial direction of the platform central axis 10, therefore enabling the adjustment of the first and second outlet surface of the respective first and second powder outlet.

Advantageously, the first 31 and second 32 slot are essentially parallel in rotation direction of the platform center axis 10, since the powder outlets are typically arranged next to each other in rotation direction.

Further advantageously, if the extension of the first 31 and the second 32 slot are added together, they extend over the full radial extension of the first and/or second powder outlet in a direction radial to the platform center axis 10 in the intended use of the gating mechanism when it is implemented into the apparatus.

Further advantageously, in radial direction, the first slot 31 starts, where the second slot 32 ends.

As shown in Fig. 2b, in an advantageous embodiment of the invention, the gating mechanism 3 comprises a material selector 53 such that in the intended use of the apparatus, the material selector 53 separates the first and second powder that release through the first slot 31 respectively through the second slot 32 onto the platform 4. In particular, a motor controls the material selector 53 to slide and/or bend the material selector 53.

Advantageously, the material selector 53 is arranged at the place where the first slot 31 ends and the second slot 32 starts in radial direction of platform center axis 10 if the gating mechanism 3 is fixed in its position in the apparatus.

Fig. 2c shows a further advantageous embodiment of the gating mechanism 3. The gating mechanism 3 might comprise a mask to partially cover the first 31 and or the second 32 slot. In Fig. 2c, reference number 33 and 34 show such mask segments that are arranged over the first 31 and second 32 slot. The number 310 to 313 indicate, what would be the resulting powder beds built with such a masked gating mechanism 3: In area 310, there is no powder deposited, since the first slot 31 is blocked with the mask section 33. In area 311 powder is deposited through the first slot 31. In area 312, powder is deposited through the second slot 32. In area 313, there is no powder deposited, since the second slot 32 is blocked with the mask section 34.

Arrow 300 in Fig. 2c indicates the rotation direction of the powder deposition process. Arrow 301 indicates the possible displacement direction of the gating mechanism 3.

**Fig. 3** shows further advantageous embodiment of the decoupling mechanism 2. In the figures, only a first duct 21 is shown for clarity reasons. Anyway, the respective embodiment of the decoupling mechanism 3 can of course comprise also a second duct 22 with the same mechanism respectively the decoupling mechanism 3 can comprise a mixture of different mechanisms. Therefore, e.g. the first duct 21 might be an embodiment according to Fig. 3a and the second duct an embodiment according to Fig. 3b.

Fig. 3a more or less corresponds to an embodiment of the first 21 and/or second 22 duct as discussed above for Fig. 1, with a specific angle α respectively β between the central axis of the first 21 respectively second 22 duct and the platform central axis 10.

Fig. 3b discloses another embodiment of a possible decoupling mechanism 2 as shown for an embodiment of the first duct 21 (which could also correspond to the second duct 22). The first duct 21 here has kind of a labyrinth or curvature structure such that the powder cannot just fall out but is disposed in a controlled matter.

Fig. 3c discloses another embodiment of a possible decoupling mechanism 2 as shown for an embodiment of the first duct 21 (which could also correspond to the second duct 22). The first duct 21 comprises a flap valve 221 to control the powder flux through the duct 21.

Fig. 3d discloses another embodiment of a possible decoupling mechanism 2 as shown for an embodiment of the first duct 21 (which could also correspond to the second duct 22). The first duct 21 comprises a slotted wheel 222 to control the powder flux through the duct 21.

### Reference Table

- 10: Platform center axis
- 100: Powder delivery mechanism
- 11: First powder chamber
- 12: Second powder chamber
- 2: Decoupling mechanism
- 21: First duct of decoupling mechanism
- 22: Second duct of decoupling mechanism
- 3: Gating mechanism
- 31: First slot of gating mechanism
- 32: Second slot of gating mechanism
- 4: Platform
- 51: Front blade
- 52: Rear blade
- 53: Material selector
- 6: Mask

## Claims

1. An apparatus for powder-based additive manufacturing of three-dimensional structures on a platform (4), comprising a powder delivery mechanism (100) comprising
• a first powder chamber (11) for a first powder with a first powder outlet,
• a second powder chamber (12) for a second powder with a second powder outlet, and
• a gating mechanism (3) with a first slot (31) and a second slot (32),
wherein the powder delivery mechanism (100) and/or the platform (4) are rotatable around a platform center axis (10) of the platform (4),
wherein the gating mechanism (3) is arranged such that the first slot (31) defines an outlet surface of the first powder outlet and the second slot (32) defines an outlet surface of the second powder outlet,
wherein the gating mechanism (3) is displaceable relatively to the first powder outlet and/or the second powder outlet.

2. The apparatus according to claim 1, comprising further a decoupling mechanism (2) arranged between the first (11) and/or second (12) powder chamber and the respective first and/or second powder outlet,
wherein the decoupling mechanism (2) is adapted to control the powder flux from the first (11) and/or second (12) powder chamber to the respective first and/or second powder outlet.

3. The apparatus according to claim 2,
wherein the decoupling mechanism (2) comprises a first duct (21) connecting the first powder chamber (11) with the first powder outlet, and/or
a second duct (22) connecting the second powder chamber (12) with the second powder outlet.

4. The apparatus according to claim 3, wherein a smallest angle (α) between a center axis of the first duct (21) and the center axis (10) of the platform (4) is 20° ≤ α ≤ 70° and/or wherein a smallest angle (β) between a center axis of the second duct (22) and the platform center axis (10) is between 20° ≤ β ≤ 70°.

5. The apparatus according to claim 3,
wherein a valve and/or slotted wheel is arranged in the first (21) and/or second (22) duct.

6. The apparatus according to one of the preceding claims, wherein the first slot (31) and the second slot (32) of the gating mechanism (3) are aligned at one edge with a shortest distance (d) of 0mm ≤ d ≤ 5mm, in particular 0.5mm ≤ d ≤ 5mm, in particular, wherein the distance (d) lies on a circular line of a circle around the platform center axis (10).

7. The apparatus according to one of the preceding claims, wherein the powder delivery mechanism (100) further comprises
• a front blade (51) arranged before the gating mechanism (3) in a rotation direction around the platform center axis (10) and/or
• a rear blade (52) arranged behind the gating mechanism (3) in the rotation direction, in particular, wherein a blade distance between the platform (4) and the rear blade (52) is adjustable such that the blade distance defines a height of a powder bed in the intended use of the apparatus.

8. The apparatus according to one of the preceding claims, wherein first slot (31) and the second slot (32) are arranged such that in the intended use of the apparatus, the first powder releasing from the first slot (31) forms a first powder bed on the platform (4) and the second powder releasing from the second slot (32) forms a second powder bed on the platform (4) adjacent to the first powder bed in radial direction of the platform (4) .

9. The apparatus according to one of the preceding claims, wherein the platform (4) is movable relatively to the powder delivery mechanism (100) in vertical direction.

10. The apparatus according to one of the preceding claims wherein the gating mechanism (3) comprises a material selector (53) such that in the intended use of the apparatus, the material selector (53) separates the first and second powder that release through the first slot (31) respectively through the second slot (32) to the platform (4),
in particular, wherein a motor controls the material selector (53) to slide and/or bend the material selector (53).

11. The apparatus according to one of the preceding claims, wherein the gating mechanism (3) comprises a mask (6) to partially cover the first (31) and or the second (32) slot.

12. A powder delivery mechanism (100) for an apparatus according to one of the preceding claims.

13. A gating mechanism (3) for a powder delivery mechanism according to claim 12.

14. A Method to manufacture three-dimensional structures on a platform (4) with an apparatus according to claim 1 to 11 comprising:
• rotating the powder delivery mechanism (100) and/or the platform (4) around the platform center axis (10),
• releasing the first powder and/or the second powder through the first slot (31) and the second slot (32) respectively to form a first powder bed of first powder and/or a second powder bed of second powder,
• exposing the first and/or second powder bed to an energy source to fuse a specific area of the first and/or second powder bed.

15. Method according to claim 14 comprising:
• moving the platform (4) relatively to the powder delivery mechanism (100) in vertical direction in a linear motion or in incremental steps.
